# DEMANDE DE BREVET EUROPEEN

(11) **EP 3 561 363 A1**
(43) Date de publication de la demande: **30.10.2019**
(21) Numéro de dépôt: 19168587.4
(22) Date de dépôt: 11.04.2019
(51) Int. Cl.: F16L 55/053, F02M 37/00

(54) **DISPOSITIF AMORTISSEUR DE PULSATIONS**

(30) Priorité: 25.04.2018 FR 1800442
(71) Demandeur: AKWEL, 01410 Champfromier (FR)
(72) Inventeur: PUJOL, Olivier, 84000 AVIGNON (FR); OULD OUALI, Nacim, 84000 AVIGNON (FR)

(57) **Abrégé**

L'invention concerne un dispositif (10) amortisseur de pulsations d'un fluide, du type comprenant un boîtier (12) qui comprend une partie supérieure (16) et une partie inférieure (18) et une membrane élastiquement déformable (32) entre une position de repos et une position de contrainte, agencée à l'intérieur du boîtier (12) de sorte que la membrane (32) délimite avec la partie inférieure (18) une chambre étanche (34) au fluide. Plus particulièrement, la membrane (32) a, dans la position de repos, une forme générale bombée vers l'extérieur de la chambre (34), de révolution autour d'un axe principal (X) du dispositif (10). En outre, le profil de la membrane présente selon une section en coupe axiale de la membrane au moins une ondulation faisant saillie vers l'intérieur de la chambre (34) dans la position de repos pour former une zone de déformation préférentielle vers l'intérieur de la chambre (34) dans la position de contrainte de la membrane (32).

## Description

La présente invention concerne un dispositif amortisseur de pulsations d'un fluide, et en particulier un amortisseur destiné à être intégré à un circuit d'alimentation en carburant d'un véhicule automobile. Un tel dispositif amortisseur peut être utilisé notamment pour l'amortissement des pulsations d'un circuit d'alimentation en carburant de moteurs diesel et essence d'un véhicule automobile.

De façon générale, les circuits d'alimentation de carburant des moteurs à combustion interne sont soumis à des problèmes de pulsations de pression. Ces pulsations de pression résultent généralement de la mise en vibration du fluide, cette mise en vibration étant provoquée par différents composants du véhicule automobile, tels que par exemple la pompe de gavage, la rampe d'injecteurs ou encore une pompe haute pression telle qu'il en existe sur les circuits d'alimentation de carburant.

Ces pulsations de pression peuvent conduire à des dysfonctionnements tels que des défauts d'injection mais également à des nuisances acoustiques pour les usagers du véhicule automobile, en particulier par la transmission des vibrations du circuit de carburant à la caisse du véhicule, et qui sont particulièrement inconfortables.

On connaît déjà de l'état de la technique, notamment du document US 8 397 696, un amortisseur de pulsations pour un circuit d'alimentation en carburant. L'amortisseur de pulsations comprend un carter qui délimite un volume interne à l'intérieur duquel s'étendent une membrane et un ressort à taux de rigidité variable apte à solliciter la membrane en déplacement via une coque de protection de la membrane.

La membrane délimite avec une portion du carter une chambre étanche dans laquelle le ressort se déplace. Cette membrane est susceptible de se déformer afin de suivre le mouvement du ressort en réponse aux contraintes des pulsations de pression et ainsi modifier le volume de la chambre étanche.

Une telle solution nécessite un nombre important de pièces, notamment un ressort à taux de rigidité variable ainsi qu'une coque de protection de la membrane sans quoi la membrane pourrait être dégradée par le ressort. Or, un agencement complexe affaiblit la robustesse du dispositif et s'avère particulièrement coûteux.

La présente invention a pour but de remédier aux inconvénients mentionnés ci-dessus, en fournissant un dispositif amortisseur de pulsations de conception simple ne nécessitant qu'un nombre réduit de pièces et présentant une très grande robustesse.

Un autre but de l'invention est de fournir un dispositif amortisseur de pulsations dans une large plage de fréquences sans nuire à la simplicité du dispositif.

A cet effet, la présente invention a pour objet un dispositif amortisseur de pulsations d'un fluide, tel qu'un fluide circulant dans un circuit d'alimentation de carburant du type comprenant :
- un boîtier qui comprend une partie supérieure et une partie inférieure et au moins un orifice de raccordement du dispositif au circuit,
- une membrane élastiquement déformable entre une position de repos et une position de contrainte et agencée à l'intérieur du boîtier de sorte que la membrane délimite avec la partie inférieure une chambre étanche au fluide,
caractérisé en ce que la membrane a, dans la position de repos, une forme générale bombée vers l'extérieur de la chambre, de révolution autour d'un axe principal du dispositif et est munie d'un pied périphérique et d'un sommet, en ce que le profil de la membrane présente selon une section en coupe axiale de la membrane au moins une ondulation faisant saillie vers l'intérieur de la chambre dans la position de repos pour former une zone de déformation préférentielle vers l'intérieur de la chambre dans la position de contrainte de la membrane et en ce que l'ondulation délimite une portion principale périphérique de forme générale annulaire et une portion secondaire centrale de forme générale en dôme, la portion centrale ayant un rayon de courbure plus petit que celui de la portion périphérique.

Grâce à sa zone de déformation préférentielle, la membrane est de conception plus robuste. En effet, lors de la sollicitation de la membrane en pulsations, la déformation est contrôlée.

On peut en outre fabriquer très simplement cette membrane en la préformant, par exemple, par moulage de matière plastique dans un moule, cette préforme comportant des zones de déformation préférentielle.

Un dispositif amortisseur de pulsations peut comprendre l'une ou plusieurs des caractéristiques suivantes.

Dans un mode de réalisation préféré de l'invention, l'ondulation délimite au moins deux portions séparées et coaxiales, chacune étant associées à un spectre de fréquences d'amortissement de pulsations.

Dans un autre mode de réalisation préféré de l'invention, l'ondulation est circonférentielle et formée par une double inflexion de la membrane afin de délimiter une portion convexe périphérique de forme générale annulaire et une portion convexe centrale en forme de dôme

Dans un autre mode de réalisation préféré de l'invention, le rapport des rayons de courbure de la portion centrale et de la portion périphérique est compris entre 0.2 et 0.4.

Dans un autre mode de réalisation préféré de l'invention, la portion annulaire est conformée pour amortir les pulsations dans une bande de basses fréquences et la portion en dôme est conformée pour amortir les pulsations dans une bande de hautes fréquences.

Dans un autre mode de réalisation préféré de l'invention, l'épaisseur de la membrane est hétérogène.

Dans un autre mode de réalisation préféré de l'invention, l'épaisseur de la membrane est plus grande au pied de la membrane qu'à son sommet

Dans un autre mode de réalisation préféré de l'invention, l'épaisseur de la membrane diminue sensiblement régulièrement du pied vers son sommet ou dans lequel la membrane est amincie autour de son sommet à partir de l'ondulation.

Dans un autre mode de réalisation préféré de l'invention, la membrane comporte au moins localement une couche de renfort pour rigidifier la membrane dans une zone délimitée.

Dans un autre mode de réalisation préféré de l'invention, la membrane est épaissie à son pied pour former un bourrelet d'étanchéité.

Dans un autre mode de réalisation préféré de l'invention, le dispositif comprend un anneau de retenue de la membrane apte à coopérer avec la membrane pour venir comprimer le pied de la membrane contre la partie inférieure

Dans un autre mode de réalisation préféré de l'invention, l'anneau de retenue présente des ouvertures destinées à coïncider au moins partiellement avec les deux orifices du boîtier afin de laisser passer le fluide au travers du boîtier.

Dans un autre mode de réalisation préféré de l'invention, l'anneau est venu de matière avec la partie supérieure du dispositif ou dans lequel l'anneau comprend des moyens d'indexation par rapport à la partie supérieure et/ou la partie inférieure.

Dans un autre mode de réalisation préféré de l'invention, une soupape disposée sur la partie inférieure et configurée pour faire passer de l'air de l'extérieur vers l'intérieur de la chambre étanche. La soupape est de préférence un clapet anti-retour parapluie.

Dans un autre mode de réalisation préféré de l'invention, la membrane est réalisée essentiellement en matière plastique.

D'autres caractéristiques et avantages de l'invention apparaîtront à la lumière de la description qui suit, faite en référence aux dessins annexés dans lesquels :
- la figure 1 est une vue en perspective d'un dispositif amortisseur de pulsations selon l'invention ;
- la figure 2 est une vue d'un côté du dispositif de la figure 1 ;
- la figure 3 est une vue en perspective éclatée du dispositif de la figure 1 ;
- la figure 4 est une vue en coupe axiale éclatée du dispositif de la figure 3 ;
- la figure 5 est une vue en coupe axiale d'une partie du dispositif amortisseur de la figure 1 ;
- la figure 6 est une vue en coupe axiale du dispositif amortisseur de la figure 1 ;
- les figures 7 et 8 sont des vues en coupe d'une membrane du dispositif de la figure 1 dans un état respectivement au repos et déformé ;
- les figures 9 et 10 représentent le dispositif amortisseur de pulsations de la figure 1 dans un état de repos et dans un état déformé ;
- la figure 11 est un graphique représentant une courbe de l'évolution de l'atténuation en décibel des pulsations en fonction de la fréquence.

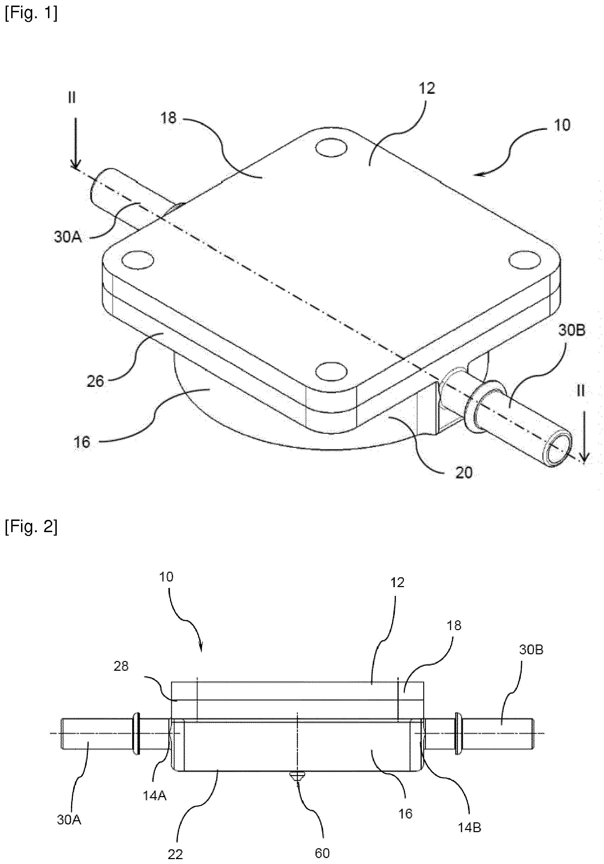

On a représenté de façon schématique sur la figure 1 un dispositif amortisseur de pulsations d'un fluide, tel qu'un fluide circulant dans un circuit d'alimentation de carburant. Le dispositif sera désigné dans la suite de la description par la référence générale 10.

En référence aux figures 1 à 4, le dispositif amortisseur de pulsations selon l'invention comporte un carter ou boîtier 12. Ce boîtier 12 est réalisé par exemple dans une matière plastique. Par exemple, le boîtier 12 est réalisé en plastique injecté pouvant être ou non chargé. Par exemple, la matière plastique comprend essentiellement au moins un polyamide aliphatique, par exemple du PA66, du PA12 ou au moins du Polyphthalamide (PPA). En variante, le boîtier 12 peut être réalisé dans un matériau métallique, par exemple en alliage d'aluminium.

Le boîtier 12 comprend, comme cela est visible sur la figure 2, au moins deux orifices 14 de raccordement du dispositif 10 au circuit (non représenté) de sorte que les deux orifices 14 délimitent un chemin de circulation du fluide à travers le boîtier 12.

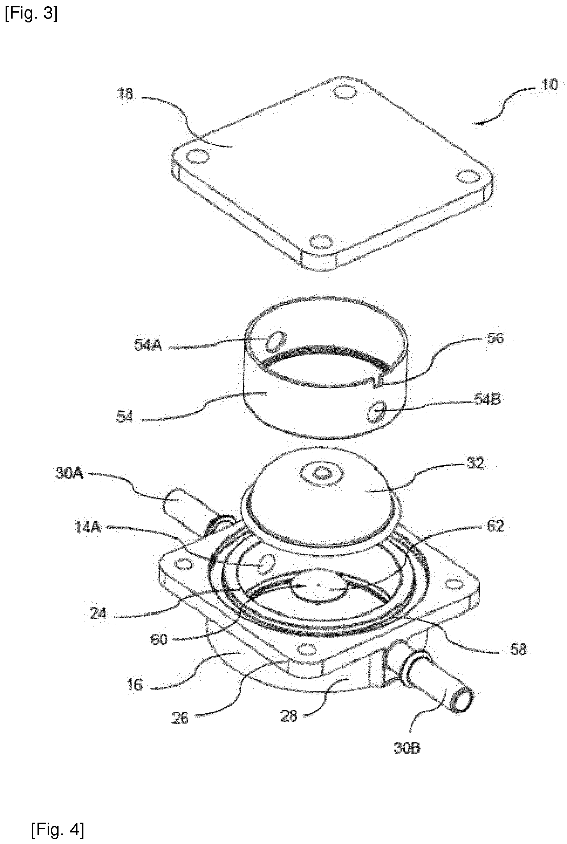

Comme cela est illustré sur la figure 3, le boîtier 12 est au moins en deux parties : une partie inférieure 16 et une partie supérieure 18. Eventuellement, en variante, le boîtier 12 comprend un unique orifice de raccordement du dispositif au circuit de telle sorte que le fluide entre et sort par le même orifice. En outre, selon la configuration de circuit à amortir, la partie inférieure 16 peut comporter plus de deux orifices 14.

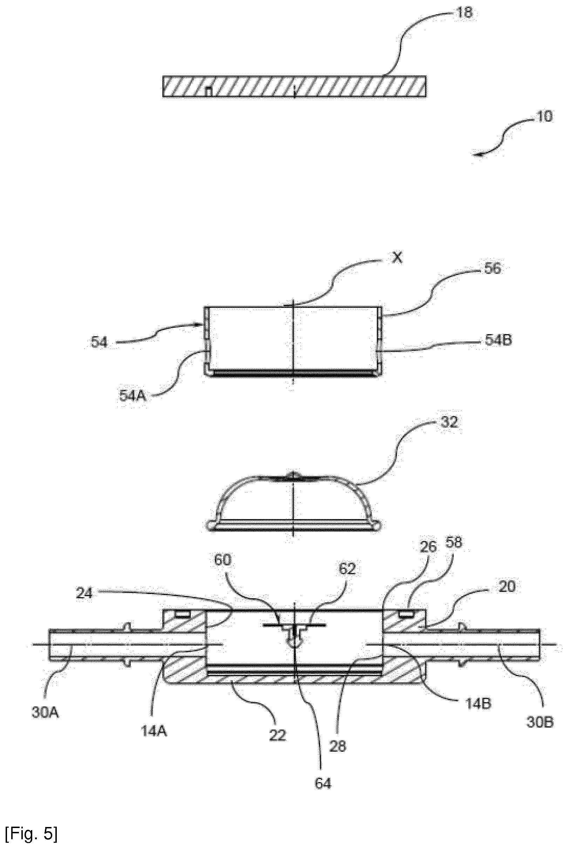

La partie inférieure 16, visible notamment en coupe sur la figure 4, comprend ici un corps principal 20, par exemple en forme de cuvette, muni d'un fond 22 et à l'opposé une extrémité ouverte 24 délimitée par un bord périphérique 26.

La partie inférieure 16 comprend en outre une paroi latérale 28 reliant le fond 22 au bord périphérique 26. Le bord périphérique 26 s'étend dans cet exemple dans le prolongement de la paroi 28 en faisant saillie vers l'extérieur sensiblement sur tout le contour de la paroi 28.

De préférence, le corps 20 a une forme générale sensiblement cylindrique autour d'un premier axe X et la paroi latérale 28 périphérique a une forme générale annulaire autour de l'axe X. Le bord périphérique 26 en saillie délimite l'extrémité ouverte 24 avec dans cet exemple un contour intérieur circulaire et présente un contour extérieur de forme carrée. Bien entendu, d'autres formes peuvent convenir.

En outre, cette partie inférieure 16 comprend de préférence un premier orifice 14A et un deuxième orifice 14B distinct du premier orifice 14A de raccordement du boîtier 12 au circuit d'alimentation en carburant débouchant par exemple à l'intérieur du corps 20 (figure 2).

Plus précisément, dans l'exemple décrit ci-après, la partie inférieure 16 comporte un premier embout 30A dans lequel est ménagé le premier orifice 14A et un deuxième embout 30B dans lequel est ménagé le deuxième orifice 14B. Ainsi, le dispositif 10 selon l'invention est ici destiné à être raccordé au circuit d'alimentation de carburant (non représenté ici) de préférence par l'intermédiaire des embouts 30A, 30B. Le premier embout 30A et le deuxième embout 30B sont de préférence formés d'une pièce avec le corps 20 de la partie inférieure 16. Le premier embout 30A et le deuxième embout 30B sont par exemple de forme sensiblement cylindrique et s'étendent selon un axe perpendiculaire au premier axe X. Les embouts 30A et 30B s'étendent donc radialement au corps 20 de la partie inférieure 16. Les axes longitudinaux des embouts 30A et 30B sont dans la présente description alignés. Toutefois, en variante, selon la configuration du circuit de carburant à amortir, les embouts 30A et 30B peuvent ne pas être alignés.

On va maintenant décrire la partie supérieure 18 du boîtier 12 en référence aux figures 1 à 4. La partie supérieure 18 forme de préférence un couvercle d'obturation de la partie inférieure 16 et comprend dans cet exemple un corps en forme générale de plaque. La plaque a par exemple une forme générale carrée qui vient épouser la forme du bord 26 en saillie de la partie inférieure 16. Le couvercle 18 et la partie inférieure 16 sont assemblés au moyen du bord en saillie 26 de la partie inférieure 16 par des moyens classiques de liaison.

A cet effet, le couvercle 18 et le bord 26 en saillie sont munis d'orifices de montage permettant la fixation des deux parties du boîtier 12 par des vis ou autres moyens de fixation convenables, etc. Dans ce cas, de préférence, comme cela est visible sur la figure 3, le boîtier 12 comprend encore des moyens d'étanchéité tel qu'une gorge périphérique 58 ménagée autour de l'ouverture 24 dans la partie inférieure 16 et configurée pour recevoir un joint torique (non représenté), par exemple en matériau élastomère.

En variante, le couvercle 18 et la partie inférieure 16 peuvent être assemblés par soudage par exemple selon des procédés classiques : par ultra-sons, par lame chauffante, par rotation ou par laser. Une fois assemblés, les deux parties inférieure 16 et supérieure 18 délimitent de préférence un volume intérieur étanche du boîtier 12.

Bien entendu, le dispositif 10 pourrait être configuré de façon différente, que ce soit la forme de son boîtier 12, les moyens de fixation, pour lui permettre selon les configurations du circuit auquel il est rapporté, d'être relié de façon souple ou rigide à un organe ou à la caisse d'un véhicule automobile.

Conformément à l'invention, le dispositif 10 comprend encore une membrane 32 élastiquement déformable et destinée à être agencée à l'intérieur du boîtier 12 comme cela est illustré sur la figure 3.

La membrane 32 est agencée dans le boîtier 12 de sorte qu'elle délimite avec une des parties du boîtier 12, ici la partie inférieure 16, une chambre inférieure 34 étanche au fluide circulant dans le boîtier 12 et une chambre supérieure 36 de circulation du fluide. Ainsi, la membrane 32 comprend une face supérieure en contact avec le fluide dans la chambre supérieure 36 et une face inférieure intérieure à la chambre étanche 34.

Les deux embouts 30A, 30B, via les deux orifices 14A et 14B, définissent ainsi un chemin de circulation du carburant à travers le boîtier 12 et plus précisément à l'intérieur de la chambre supérieure 36. Le carburant circule dans une partie amont du circuit d'alimentation avant de pénétrer dans la chambre supérieure 36 par l'intermédiaire du premier embout 30A et du premier orifice 14A. Puis le carburant circule dans la partie inférieure 16 jusqu'à atteindre la deuxième partie 30B du deuxième orifice 14B et s'écoule ensuite vers la partie aval du circuit d'alimentation par l'intermédiaire du deuxième embout 30B. Le premier orifice 14A définit ainsi une entrée du carburant dans la partie inférieure 16 et le deuxième orifice 14B une sortie du carburant dans la partie inférieure 16.

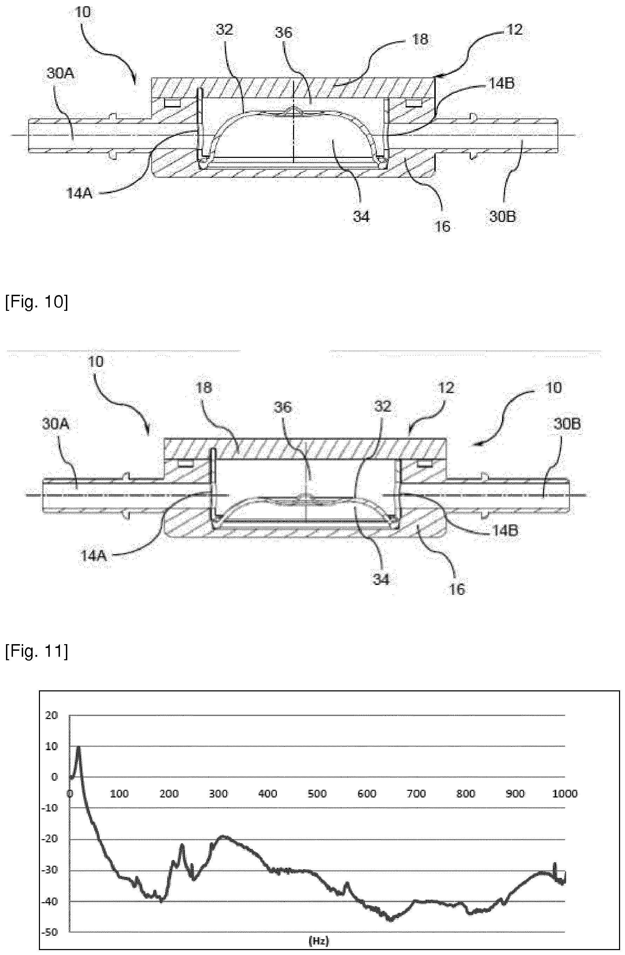

Cette membrane 32 est configurée pour pouvoir se déformer de par sa forme et la souplesse de sa matière sous l'effet d'une pression nominale de service, par exemple une pression relative d'un bar et surtout d'amortir les pulsations de pression autour de cette pression de service. L'amplitude des pulsations peut atteindre un bar par rapport à cette pression de service. La membrane 32 est conçue pour fonctionner avec un bruit blanc sur une plage de fréquences comprises entre cinq hertz et mille hertz. On a représenté sur la figure 11, un graphique représentant une courbe d'évolution de l'atténuation en décibel en fonction de la fréquence. La courbe présente une fréquence de coupure autour de 25 Hertz. Généralement, les premières fréquences à amortir se situent aux alentours des 35 Hertz..

La membrane 32 est par exemple constituée d'un matériau qui favorise sa déformation pour permettre un amortissement efficace des pics de pression et a une forme spécifique pour faciliter une telle déformation. Cette membrane 32 est par exemple constituée d'une matière adaptée pour résister aux conditions d'utilisation et dépend notamment de la nature chimique des carburants pouvant être utilisés. Par exemple, la membrane 32 est réalisée à base de fluoroélastomère FKM, à base de HNBR (sigle anglo-saxon pour « Hydrogenated Nitrile Butadiene Rubber ») ou de Fluorosilicone. De préférence, la membrane 32 est réalisée dans un matériau à base d'élastomère ou de caoutchouc. La membrane 32 peut être réalisée à partir d'un élastomère thermoformé ou injecté en fonction de sa matière et de sa géométrie.

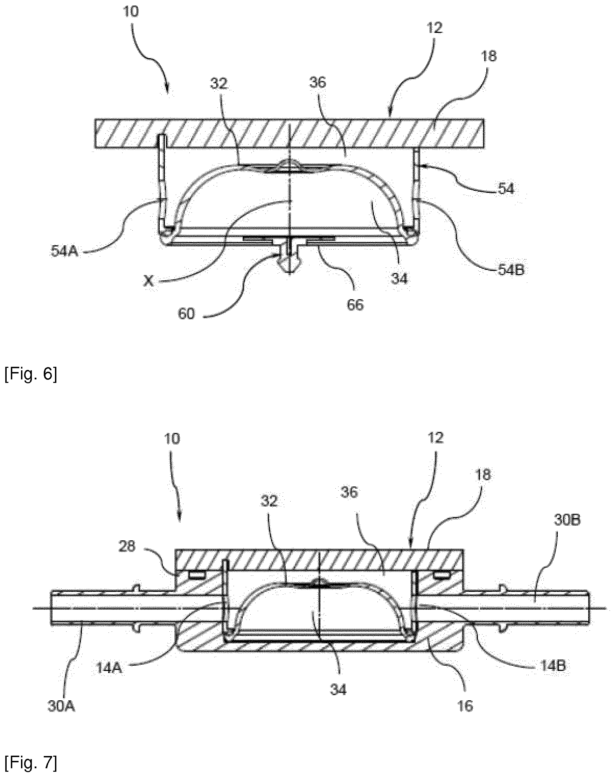

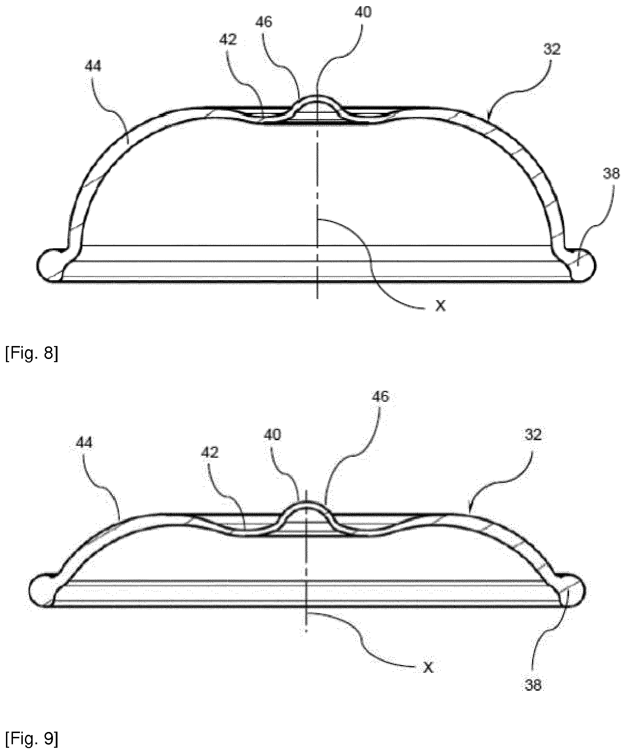

En outre, comme cela est illustré en détail notamment sur les figures 7 et 8, la membrane 32 est élastiquement déformable entre une position de repos (illustrée sur la figure 7) et une position de contrainte (illustrée sur la figure 8). Ainsi, la membrane 32 a, dans la position de repos, comme cela est visible sur la figure 7, une forme générale bombée vers l'extérieur de la chambre inférieure 34, de révolution autour de l'axe principal X du dispositif 10 et est munie d'un pied périphérique 38 et d'un sommet 40.

Par ailleurs, conformément à l'invention, le profil de la membrane 32 présente selon une section en coupe axiale de la membrane 32 au moins une ondulation 42 faisant saillie vers l'intérieur de la chambre inférieure 34 dans la position de repos pour former une zone de déformation préférentielle vers l'intérieur de la chambre inférieure 34 dans la position de contrainte de la membrane 32.

Avec cette déformation préférentielle, la membrane 32 permet d'éviter une usure prématurée liée à une déformation non contrôlée de la membrane par exemple dans le sens inverse de sa courbure ce qui aurait pour conséquence de fragiliser la membrane. Ceci permet d'améliorer les propriétés de résistance aux pressions de fonctionnement en continu sans déformation irréversible de la membrane 32.

La forme en bouclier de la membrane 32 sert également à faciliter la déformation et à la protéger en cas de surpression. L'ondulation 42 assure la robustesse mécanique du produit en sollicitant la membrane dans le même sens que son rayon au niveau de l'ondulation.

De préférence, l'ondulation 42 délimite au moins deux portions séparées 44, 46 et coaxiales, chacune étant associées à un spectre de fréquences d'amortissement de pulsations. Ceci permet d'amortir les pulsations sur une plage de fréquences plus étendue.

Par exemple, l'ondulation 42 est circonférentielle et formée par une double inflexion de la membrane 32 afin de délimiter une portion convexe 44 périphérique de forme générale annulaire et une portion convexe 46 centrale en forme de dôme.

Dans l'exemple illustré notamment sur la figure 7, l'ondulation 42 délimite une portion principale périphérique de forme générale annulaire 44 et une portion secondaire centrale 46 de forme générale en dôme, la portion centrale 46 ayant un rayon de courbure plus petit que celui de la portion périphérique 44. De préférence, le rapport des rayons de courbure de la portion centrale 46 et de la portion périphérique 44 est compris entre 0.2 et 0.4. La membrane 32 se présente ainsi sous forme de deux cloches imbriquées, une grande cloche tronquée et une petite cloche en forme de dôme s'étendant au sommet tronqué de la grande cloche.

De préférence, la portion annulaire 44 est conformée pour amortir les pulsations dans une bande de basses fréquences, par exemple des fréquences inférieures à 400 Hz et la portion en dôme 46 est conformée pour amortir les pulsations dans une bande de plus hautes fréquences, par exemple des fréquences comprises entre 400 Hz et 600 Hz.

Selon des variantes, l'homme du métier peut adapter le rayon de courbure des portions de la membrane 32, leur profondeur, leur forme (profil conique, sphérique), les épaisseurs et le matériau constitutif de la membrane 32 en fonction des caractéristiques d'amortissement souhaitées. On notera par exemple que, pour monter en fréquence, à l'instar d'une membrane de haut-parleur, la portion centrale 46 doit posséder un plus faible rayon.

Afin d'augmenter sa rigidité, la membrane 32 peut comporter au moins localement une couche de renfort intercalée entre deux couches d'un matériau élastomère ou simplement collée au matériau élastomère (du côté qui n'est pas en contact avec le carburant). La membrane peut comporter par exemple une tresse de rigidification réalisée dans un matériau comprenant essentiellement du polyarylamide, de l'aramide, du polyamide ou à partir de fibres synthétiques tels que du Kevlar®, un polymère thermoplastique appartenant à la famille des aramides ou avec une toile de renfort réalisée dans un matériau tel qu'un méta-aramide par exemple commercialisé sous la marque Nomex®.

La membrane 32 est fabriquée par exemple par pressage de multicouches entre lesquelles est intercalée la couche de renfort puis par vulcanisation des couches pour les fusionner. Un avantage d'une membrane 32 ainsi thermoformée par rapport à une membrane plane classique de l'art antérieur est de pouvoir réaliser l'étanchéité au pied de la membrane par formage d'un bourrelet 38.

La membrane 32 a de préférence une épaisseur hétérogène. Par exemple, l'épaisseur de la membrane 32 est plus grande au pied 38 de la membrane 32 qu'à son sommet 40. Dans l'exemple illustré sur la figure 7, on voit que la membrane 32 présente un amincissement de l'épaisseur à partir de la zone d'inflexion 42 jusqu'au sommet 40. Ainsi, le dôme 46 présente une épaisseur plus faible que la portion annulaire 44.

En variante, l'épaisseur de la membrane 32 diminue sensiblement régulièrement du pied 38 vers son sommet 40.

Le dispositif 10 selon l'invention comporte ainsi un nombre restreint de pièces. Afin de permettre son immobilisation à l'intérieur du boîtier 12, la membrane est épaissie à son pied pour former un bourrelet d'étanchéité.

Par exemple, comme cela est illustré sur la figure 3, le dispositif 10 comprend encore un anneau de retenue 54 de la membrane 32. Afin de permettre la circulation du fluide à l'intérieur du boîtier 12, l'anneau de retenue 54 présente des ouvertures 54A, 54B destinés à venir en alignement respectivement avec les deux orifices 14A, 14B du boîtier 12 afin de laisser passer le fluide au travers du boîtier 12. L'anneau 54 comprend en outre de préférence des moyens d'indexation 56 par rapport à la partie supérieure 18 ou par rapport à la partie inférieure 16. Les moyens d'indexation 56 comprennent par exemple une encoche ménagée à partir d'un bord d'extrémité de l'anneau 54 destiné à venir coopérer avec un ergot ménagé sur la partie inférieure 16 (non représenté).

En variante, l'anneau 54 peut être venu de matière avec la partie supérieure 18 du dispositif 10 en formant par exemple une jupe intérieure périphérique du couvercle 18.

Selon un mode de réalisation particulier non représenté, la membrane peut être pincée entre le bord du couvercle et le rebord du corps de sorte à être maintenue entre la partie supérieure et la partie inférieure. Dans ce cas, le dispositif ne comprend pas d'anneau de retenue et le couvercle présente par exemple une forme de cloche délimitant au moins un ou deux orifices de circulation du fluide à l'intérieur de la cloche. Ceci permet encore de réduire le nombre de pièces dans le dispositif.

Par ailleurs, éventuellement, comme cela est illustré sur les figures 2 à 5, le dispositif 10 peut comprendre un clapet 60 disposé sur la partie inférieure 16 et configuré pour faire passer sélectivement de l'air de l'extérieur vers l'intérieur de la chambre étanche inférieure 34. Ce clapet 60 présente une zone de contact venant en contact étanche avec un siège de clapet 66. Le siège de clapet 66 comprend un orifice et le clapet 60 forme un organe d'obturation de l'orifice susceptible d'adopter une position d'obturation et une position d'ouverture afin de faire passer sélectivement de l'air extérieur à l'intérieur de la chambre étanche 34.

Plus la différence de pression est importante entre la chambre 36 de circulation de carburant et la chambre étanche 34, moins la membrane 32 sera efficace. En effet, en cas de dépression, la membrane 32 sera déjà dans un état déformé avant même l'apparition d'une pulsation de pression. Une telle dépression peut notamment entraîner un risque de déchirure de la membrane dans le temps.

Dans l'exemple décrit, le clapet 60 comprend un corps constitué par une corolle 62 et par une tige 64 reliée à une de ses extrémités au centre de la corolle 62. La corolle 62 forme avec la tige 64 une sorte de champignon ou parapluie. La tige 64 est destinée à être engagée à l'intérieur de l'orifice d'obturation.

Le fonctionnement du clapet 60 est le suivant : tant que la chambre étanche 34 a une pression supérieure à la pression extérieure, le clapet 60 reste dans la position de fermeture. Cette pression a pour effet d'appliquer fortement la corolle sur le siège de clapet de façon étanche.

Dans le cas où la pression de la chambre inférieure 34 diminue et passe en-dessous de la pression extérieure, la corolle 62 se déforme légèrement et le contact se rompt entre la corolle 62 et le siège du clapet. L'air extérieur peut alors pénétrer à l'intérieur de la chambre inférieure 34 pour équilibrer la pression.

Par exemple, la chambre étanche peut subir une dépression liée à une fuite possible de l'air au travers de la membrane ou du corps du boîtier 12 pouvant entraîner l'affaissement de la membrane et donc un fonctionnement moins efficace. En outre, de façon avantageuse, cet évent permet d'éviter une éventuelle condensation des vapeurs de carburant pouvant diffuser par perméabilité à travers l'épaisseur de la membrane ou encore par dans des zones d'étanchéité du dispositif.

En variante, la soupape pourrait aussi avantageusement être remplacée, si la performance d'amortissement visée le permet, par au moins un trou de petit diamètre, par exemple inférieur à un millimètre, percé dans la partie inférieure 16. Dans ce cas, il est nécessaire de prévoir, de façon préférentielle, un élément de rappel tel qu'un ressort de la membrane.

Selon un mode de réalisation particulier, la partie inférieure 16 (corps 20, premier embout 30A, deuxième embout 30B est intégralement moulée. De même, la partie supérieure 18 (couvercle) est intégralement moulée. Lors du montage du dispositif 10, il suffit d'assembler la partie inférieure 16 et le couvercle 18 en emprisonnant la membrane 32 entre les deux parties. La fabrication du dispositif selon l'invention s'avère ainsi particulièrement simple et rapide.

On va maintenant décrire les principaux aspects du fonctionnement de l'invention en référence aux figures 9 et 10.

Le dispositif 10 est conformé pour se déclencher à une pression Po régnant dans la chambre supérieure 36. En position de repos, comme illustrée à la figure 9, lorsque la pression dans la chambre supérieure 14 est inférieure à Po, la membrane 32 a une forme générale bombée.

En position d'amortissement, comme illustrée à la figure 10, lorsque la pression dans la chambre supérieure 36 devient supérieure à Po, la membrane 32 se déforme en direction de la chambre inférieure 34 selon la zone de déformation préférentielle. Ceci augmente le volume de la chambre supérieure 36 ce qui permet d'abaisser la pression régnant dans la chambre supérieure 36 et donc dans le circuit d'alimentation. L'amortissement est en grande partie réalisé par l'air emprisonné sous la membrane (viscosité de l'air, échauffement).

Selon la plage de fréquences et d'amplitudes des pulsations de fréquence, la membrane 32 est sollicitée différemment. Par exemple, en cas de fréquences élevées et de faibles amplitudes de pulsation, la portion centrale 46 de la membrane 32 est particulièrement sollicitée. En revanche, dans le cas de fréquences basses et de fortes amplitudes de pulsation, la portion périphérique 44 de la membrane 32 est préférentiellement sollicitée. Cette conformation en deux cloches de la membrane permet de couvrir une plage de fréquences plus large qu'avec une membrane de forme simple bombée.

Ainsi, on peut considérer que le dôme 46 et la portion périphérique 44 se comportent comme deux membranes associées chacune à un spectre de fréquences d'atténuations et montées coaxialement. Selon des variantes, l'homme du métier peut adapter le diamètre des membranes, leur profondeur et leur forme (profil notamment conique, sphérique) en fonction des caractéristiques d'atténuation recherchées.

Bien entendu l'invention, n'est pas limitée au mode de réalisation décrit et on peut y apporter des variantes de réalisation sans sortir du cadre de l'invention tel que défini par les revendications. En particulier, la membrane pourra être maintenue entre la portion supérieure et la portion inférieure autrement qu'en étant pressée entre la portion supérieure et la portion inférieure ou qu'avec un anneau de retenue.

La portion supérieure et/ou la portion inférieure pourront comprendre des zones avec un revêtement particulier ou un état de surface particulier, qui seront en contact avec la membrane pour maintenir la membrane en place entre la portion supérieure et la portion inférieure. La portion supérieure et/ou la portion inférieure pourront comporter des zones de formes particulières adaptées pour maintenir la membrane en place entre la portion supérieure et la portion inférieure.

En particulier, les formes intérieures du couvercle 18, de l'anneau de retenue 54 et/ou la partie inférieure 16, pourront comprendre des excroissances, ou des chicanes, visant à atténuer les pulsations du fluide en fonctionnant comme des « brises lames ».

De même, la membrane pourra comporter sur sa face en contact avec le fluide, des excroissances visant à briser les pulsations du fluide, placées de telle manière qu'elles ne gênent pas la déflexion de la membrane.

Bien qu'ici le premier orifice et le deuxième orifice soient ménagés dans les embouts du dispositif amortisseur de pulsations, le dispositif pourra ne pas comporter d'embouts. Les orifices lisses ou taraudés pourront alors être par exemple ménagés dans une paroi latérale du corps de la portion inférieure. Le dispositif pourra alors être raccordé au circuit d'alimentation par exemple, par raccords vissés dans la paroi latérale, ou par soudure de la portion inférieure au niveau de ses orifices à deux conduits correspondants du circuit d'alimentation. Les embouts pourront avoir une forme différente de celle illustrée.

Pour des pressions plus élevées, afin d'éviter une différence de pression trop élevée entre celle côté carburant et celle de la zone étanche, entraînant une déformation trop importante de la membrane en position de repos, un support tel qu'un ressort ou encore une mousse peut être ajouté pour contrer cette différence. Un gaz comprimé peut également être ajouté dans la zone étanche pour adapter les pressions.

## Revendications

1. Dispositif (10) amortisseur de pulsations d'un fluide, tel qu'un fluide circulant dans un circuit d'alimentation de carburant du type comprenant :
- un boîtier (12) qui comprend une partie supérieure (18) et une partie inférieure (16) et au moins un orifice (14A, 14B) de raccordement du dispositif (10) au circuit,
- une membrane élastiquement déformable (32) entre une position de repos et une position de contrainte et agencée à l'intérieur du boîtier (12) de sorte que la membrane (32) délimite avec la partie inférieure (16) une chambre étanche (34) au fluide,
**caractérisé en ce que** la membrane (32) a, dans la position de repos, une forme générale bombée vers l'extérieur de la chambre (34), de révolution autour d'un axe principal (X) du dispositif (10) et est munie d'un pied périphérique (38) et d'un sommet (40), **en ce que** le profil de la membrane présente selon une section en coupe axiale de la membrane au moins une ondulation (42) faisant saillie vers l'intérieur de la chambre (34) dans la position de repos pour former une zone de déformation préférentielle vers l'intérieur de la chambre (34) dans la position de contrainte de la membrane (32) et **en ce que** l'ondulation (42) délimite une portion principale périphérique de forme générale annulaire (44) et une portion secondaire centrale de forme générale en dôme (46), la portion centrale (46) ayant un rayon de courbure plus petit que celui de la portion périphérique (44).

2. Dispositif (10) selon la revendication précédente, dans lequel l'ondulation (42) délimite au moins deux portions (44, 46) séparées et coaxiales, chacune étant associées à un spectre de fréquences d'amortissement de pulsations.

3. Dispositif (10) selon l'une quelconque des revendications précédentes, dans lequel l'ondulation (42) est circonférentielle et formée par une double inflexion de la membrane (32) afin de délimiter une portion convexe périphérique de forme générale annulaire (44) et une portion convexe centrale en forme de dôme (46).

4. Dispositif (10) selon l'une quelconque des revendications précédentes, dans lequel le rapport des rayons de courbure de la portion centrale et de la portion périphérique est compris entre 0.2 et 0.4.

5. Dispositif (10) selon la revendication 3 ou 4, dans lequel la portion annulaire (44) est conformée pour amortir les pulsations dans une bande de basses fréquences et la portion en dôme (46) est conformée pour amortir les pulsations dans une bande de hautes fréquences.

6. Dispositif (10) selon l'une quelconque des revendications précédentes, dans lequel l'épaisseur de la membrane (32) est hétérogène.

7. Dispositif (10) selon l'une quelconque des revendications précédentes, dans lequel l'épaisseur de la membrane (32) est plus grande au pied (38) de la membrane (32) qu'à son sommet (40).

8. Dispositif (10) selon l'une quelconque des revendications précédentes, dans lequel l'épaisseur de la membrane (32) diminue sensiblement régulièrement du pied (38) vers son sommet (40) ou dans lequel la membrane (32) est amincie autour de son sommet (40) à partir de l'ondulation.

9. Dispositif (10) selon l'une quelconque des revendications précédentes, dans lequel la membrane (32) comporte au moins localement une couche de renfort pour rigidifier la membrane (32) dans une zone délimitée.

10. Dispositif (10) selon l'une quelconque des revendications précédentes, dans lequel la membrane (32) est épaissie à son pied (38) pour former un bourrelet d'étanchéité.

11. Dispositif (10) selon la revendication précédente, comprenant un anneau (54) de retenue de la membrane (32) apte à coopérer avec la membrane (32) pour venir comprimer le pied (38) de la membrane (32) contre la partie inférieure (16).

12. Dispositif (10) selon la revendication précédente, dans lequel l'anneau de retenue (54) présente des ouvertures (54A, 54B) destinées à coïncider au moins partiellement avec les deux orifices (14A, 14B) du boîtier (12) afin de laisser passer le fluide au travers du boîtier (12).

13. Dispositif (10) selon la revendication 11 ou 12, dans lequel l'anneau (54) est venu de matière avec la partie supérieure (18) du dispositif (10) ou dans lequel l'anneau (54) comprend des moyens d'indexation (56) par rapport à la partie supérieure (18) et/ou la partie inférieure (16).

14. Dispositif (10) selon l'une quelconque des revendications précédentes, comprenant une soupape (60) disposée sur la partie inférieure (16) et configurée pour faire passer de l'air sélectivement de l'extérieur vers l'intérieur de la chambre étanche (34).

15. Dispositif (10) selon l'une quelconque des revendications précédentes, dans lequel la membrane (32) est réalisée essentiellement en matière élastomère.
